# EUROPEAN PATENT APPLICATION

(11) **EP 1 796 211 A1**
(43) Date of publication of application: **13.06.2007**
(21) Application number: 05748452.9
(22) Date of filing: 06.06.2005
(51) Int. Cl.: H01Q 5/01, H01Q 1/24, H04M 1/02

(54) **ANTENNA FOR PORTABLE TERMINAL AND PORTABLE TERMINAL**

(30) Priority: 22.09.2004 JP 2004275966
(71) Applicant: Niigata Seimitsu Co., Ltd., Jouetsu-shi, Niigata 943-0834 (JP)
(72) Inventor: MIYAGI, Hiroshi; 1265-1, Shinyoshida-cho,, Kanagawa; 2230056 (JP); OKAMOTO, Akira, 3620015 (JP)
(74) Representative: Vossius & Partner
(86) International application number: PCT/JP2005/010730
(87) International publication number: WO 2006/033187

(57) **Abstract**

When a coil I b is arranged at the forward end of an antenna element 1a which resonates with the frequency band of portable phones and an effective length of the combination the antenna element 1a and coil 1b is set equal to the length at which the frequency band of FM broadcast resonates, the coil acts as low impedance, matching to the frequency band of FM broadcast, and acts as high impedance for the frequency band of portable phones which is higher than the frequency band of FM broadcast. Consequently, the coil 1b can serve both as a matching coil for passing the frequency band of FM broadcast and a trap coil for blocking the passage of the frequency band of portable phones.

## Description

### [Field of the Invention]

The present invention relates to an antenna for portable terminals and a portable terminal equipped with the antenna. Specifically, the present invention is suitably used to a portable terminal embedded with a function for receiving or for transmitting signals of two different frequency bands and to a dual-purpose antenna equipped to the portable terminal.

### [Background of the Invention]

In recent years, widely-disseminated portable phones have been multi-functionalized and provided with various services. A portable phone embedded with a function for receiving FM broadcast has been developed and provided lately. In this type of portable phones, a frequency band from 800 M to 2 GHz is used to sound communication for speaking and a frequency band from 76 M to 108 MHz is used to reception of FM broadcast. Therefore, two different antennas conforming to each frequency band are required.

Conventionally, a rod-shaped antenna having stiffness was used to sound communication for speaking. The antenna was stretched from a body at the time of speaking. On the other hand, an earphone-shaped antenna composed of a flexible code was generally used for reception of FM broadcast. However, in the earphone-shaped antenna, the code is as long as one meter which causes inconvenience such as entanglement and twist in use. As a result, a reception sensitively is also subject to deteriorate.

Although for mounting in vehicles, a dual-purpose antenna which realizes transmission/reception of the frequency band for portable phones and reception of the frequency band for FM broadcast by a single antenna has been proposed (see Patent Documents 1 and 2).
Patent Document 1. : Japanese Patent Application Laid-open No. H7-94929
Patent Document 2 : Japanese Patent Application Laid-open No. 2003-87030

The antenna for mounting in vehicles mentioned in these Patent Documents I and 2, comprising a trap coil wherein one end is connected to the forward end of a first antenna element which resonates with the frequency band for portable phones and the other end is connected to a second antenna element, is adjusted to have an effective length from the base edge of the first antenna element to the forward end of the second antenna element of one fourth the wave length of the FM broadcast frequency band. According to these vehicle-mounted antennas, transmission/reception of the frequency band for portable phones and reception of the frequency band for FM broadcast can be realized only with a rod-shaped antenna having stiffness, resulting in convenience for use and stableness for reception sensitivity.

### [Summary of the Invention]

However, in the conventional technologies mentioned in the above Patent Documents 1 and 2, the second antenna element needs to be provided to realize reception of the frequency band of FM broadcast in addition to the first antenna element provided for the frequency band of portable phones. Besides, a trap coil which is set to block the passage of the frequency band for portable phones but not to block the passage of the frequency band for FM broadcast needs to be provided between the first antenna element and second antenna element. Therefore, the antenna itself becomes large-scaled which is impossible to be used as an antenna for portable terminals as it is. The antenna needs to be improved to be used as the antenna for portable terminals.

The present invention was accomplished taking such situation into account and has an object to provide an antenna which is applicable to a portable terminal embedded with a function for transmission/reception of signals in two different frequency bands and is shared for the two different frequency bands.

In order to solve the above-mentioned problems, in the antenna for portable terminals of the present invention, the coil is arranged at the end of the antenna element which resonates with the first frequency band (UHF band, for example). And an effective length of the combination of the antenna element and the coil is set equal to the length at which the second frequency band (VHF band, for example) lower than the first frequency band resonates.

The portable terminal of the present invention comprises the above-mentioned antenna for portable terminals, a first processing unit for performing process related to transmission or reception or both of a signal in the first frequency band, and a second processing unit for performing process related to transmission or reception or both of a signal in the second frequency band. The first processing unit is connected at the end of the antenna element corresponding to a connecting node between the antenna element and one terminal of the coil and the second processing unit is connected to the other terminal of the coil.

In another embodiment of the present invention, in addition to the coil provided at the end of the antenna element, a condenser is provided between the antenna element and the second processing unit.

In still another embodiment of the present invention, in addition to the coil provided at the end of the antenna element, a condenser or second coil is provided between the antenna element and first processing unit.

According to the present invention having such configuration, the coil provided at the end of the antenna element which resonates with the first frequency band is used as a matching coil for resonating with the second frequency band together with the antenna element and as a trap coil for blocking the passage of the first frequency band, which eliminate the need for providing a second antenna element and trap coil individually. In other words, signals in two different frequency bands such as a frequency band for portable phone and a frequency band for FM broadcast can be transmitted and received stably only by connecting a coil to the antenna element generally applied to portable phones.

According to another embodiment of the present invention, a condenser provided between the antenna element and the second processing unit activates so as to selectively allow a signal in second frequency band to be passed to the second processing unit. This certainly prevents a signal in first frequency band from being passed into the second processing unit and enables signals in two different frequency bands to be transmitted and received.

According to still another embodiment of the present invention, the condenser or the coil provided between the antenna element and the first processing unit activates so as to selectively allow a signal in first frequency band to be passed to the first processing unit. This prevents a signal in second frequency band outputted from the second processing unit from being passed into the first processing unit and enable signals in two different frequency bands to be stably transmitted and received.

### [Brief Description of the Drawings]

Fig. 1 is a schematic diagram showing a configuration example of an FM broadcast reception function-embedded portable phone applied with an antenna for portable terminals according to the first embodiment.
Fig. 2 is a schematic diagram showing a configuration example of an FM broadcast reception function-embedded portable phone applied with an antenna for portable terminals according to the second embodiment.
Fig. 3 is a schematic diagram showing a configuration example of an FM modulation transmission function-embedded portable phone applied with an antenna for portable terminals according to the third embodiment.
Fig. 4 is a schematic diagram showing a configuration example of an FM modulation transmission function-embedded portable phone applied with an antenna for portable terminals according to the fourth embodiment.
Fig. 5 is a table showing typical examples for applying electronic waves and frequency bands.

### [Detailed Description of the Preferred Embodiments]

### (First embodiment)

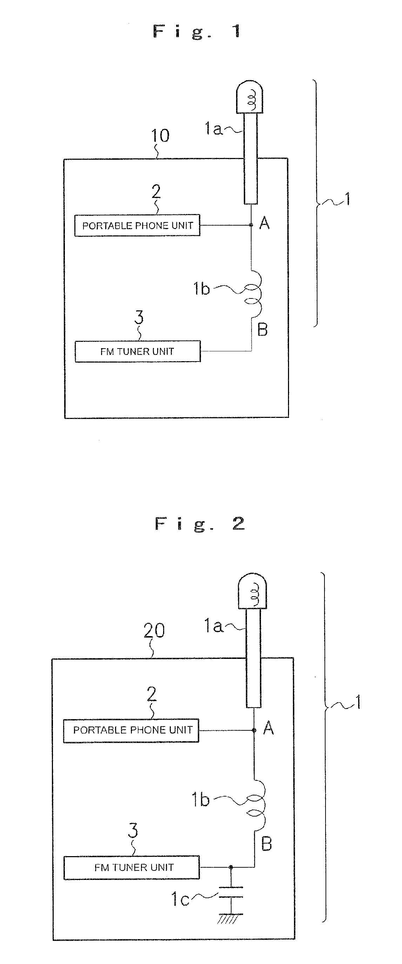

One embodiment of the present invention will be explained referring to a drawing. Fig. 1 is a schematic diagram showing a configuration example of an FM broadcast reception function-embedded portable phone 10 applied with an antenna for portable terminals according to the first embodiment. As shown in Fig. 1, the FM broadcast reception function-embedded portable phone 10 comprises an antenna 1 for portable terminals of the present embodiment, portable phone unit 2, and FM tuner unit 3.

The portable phone unit 2 performs processing related to speaking of a portable phone, for example, performs transmission/reception of sound signals in the range of 800 M to 2 GHz which is a frequency band for portable phones (corresponding to the first frequency band of the present invention). The portable phone unit 2 corresponds to the first processing unit of the present invention. Since a widely-known circuit can be applied to the inside of the portable phone unit 2, the detail explanation thereof is omitted here.

The FM tuner unit 3 performs processing related to reception of FM broadcast, for example, performs reception of FM broadcast in the range of 76 M to 108 MHz which is a frequency band for FM broadcast (corresponding to the second frequency band of the present invention). The FM tuner unit 3 corresponds to the second processing unit of the present invention. Since a widely-known circuit can be applied to the inside of the FM tuner unit 3, the detail explanation thereof is omitted here.

The antenna 1 of the present embodiment comprises an antenna element 1a (rod-shaped antenna) generally comprised in normal portable phones and a coil 1b newly added in the present embodiment. As shown in Fig. 1 as an example, the antenna element 1a has a top loading system providing a loading coil at its forward end. The system of the antenna element 1a is not limited to the top loading system and may be other configuration such as a center loading system.

The antenna element 1a is set to have an effective length of about one fourth the wavelength of the frequency band for portable phones so that the frequency band for portable phones resonates. The coil 1b (loading coil, for example) is connected to the down end (the end opposite to that whereat the top loading coil is provided) of the antenna element 1a. The effective length combining the antenna element 1a and coil 1b is set to be about one forth the wavelength of the frequency band for FM broadcast.

The above-mentioned portable phone unit 2 is connected to one end A of the coil 1b (specifically, the down end of the antenna element 1a corresponding to a connecting node between the antenna element 1a and coil 1b). The above-mentioned FM tuner unit 3 is connected to the other end B of the coil 1b (specifically, the down end of the antenna 1 combining the antenna element 1a and coil 1b). Thereby, the coil 1b is connected between the portable phone unit 2 and FM tuner unit 3. Note that the portable phone unit 2 which uses higher frequency band and the FM tuner unit 3 which uses lower frequency band are connected to one end A and to the other end B of the coil 1b, respectively.

An inductance value of the coil 1b connected between the portable phone unit 2 and FM tuner unit 3 is adjusted so as to block the passage of the frequency band for portable phones but not to block the passage of the frequency band for FM broadcast. That is, the coil 1b together with the antenna element 1a is matched to resonate with the frequency band for FM broadcast, which activates as low impedance to the frequency band for FM broadcast. On the other hand, as the frequency band for portable phones is extremely higher than that for FM broadcast, the coil 1b activates as high impedance to the frequency band for portable phones. That is, the coil 1b is used as a matching coil to pass the frequency band for FM broadcast and as a trap coil to block the passage of the frequency band for portable phones.

As mentioned above in details, according to the first embodiment, the coil 1b, provided at the forward end of the antenna element 1a which resonates with the frequency band for portable phones, functions together with the antenna element 1 a as a matching coil to resonate with the frequency band for FM broadcast and as a trap coil to block the passage of the frequency band for portable phones. Thus, signals of two different frequency bands i.e. the frequency bands for portable phones and for FM broadcast can be stably received or received/transmitted only by connecting the coil 1b to the antenna element 1a generally provided in portable phones.

### (Second embodiment)

The second embodiment of the present invention will now be explained. Fig. 2 is a schematic diagram showing a configuration example of an FM broadcast reception function-embedded portable phone 20 applied with an antenna for portable terminals according to the second embodiment. Since the structural elements in Fig. 2 denoted with the same reference numbers as in Fig. 1 have the identical functions, redundant description of these structural elements will be omitted.

As shown in Fig. 2, an antenna 1 for portable terminals according to the second embodiment comprises a condenser 1c as well as the above-mentioned antenna element 1a and coil 1b. In the condenser 1c, one end is connected between the other end B of the coil 1b and FM tuner unit 3 and the other end is grounded. The condenser 1c may be connected between the down end A of the antenna element 1a and the coil 1b.

The condenser 1c connected between the portable phone unit 2 and FM tuner unit 3 functions as an element for absorbing only a signal of the frequency band for portable phones. That is, no signal for FM broadcast flows from the condenser 1c to a ground point since the condenser 1c acts as high impedance to the low frequency band for FM broadcast. On the other hand, the condenser 1c acts as low impedance to the high frequency band for portable phones and causes a short to the grounding point to absorb the signal for portable phones but not to supply the signal to the FM tuner unit 3.

As mentioned above in details, according to the second embodiment, the condenser 1c connected between the portable phone unit 2 and FM tuner unit 3 functions as an element for selectively absorbing the signal of frequency band for portable phones. Therefore, the leaked signal of frequency band for portable phones can be absorbed by the condenser 1c even if the signal of frequency band for portable phones is not completely blocked by the coil 1b. Thus, signals of two different frequency bands i.e. the frequency bands for portable phones and for FM broadcast can be stably received/transmitted only by connecting the coil 1b and condenser 1c to the antenna element 1a generally provided in portable phones.

### (Third embodiment)

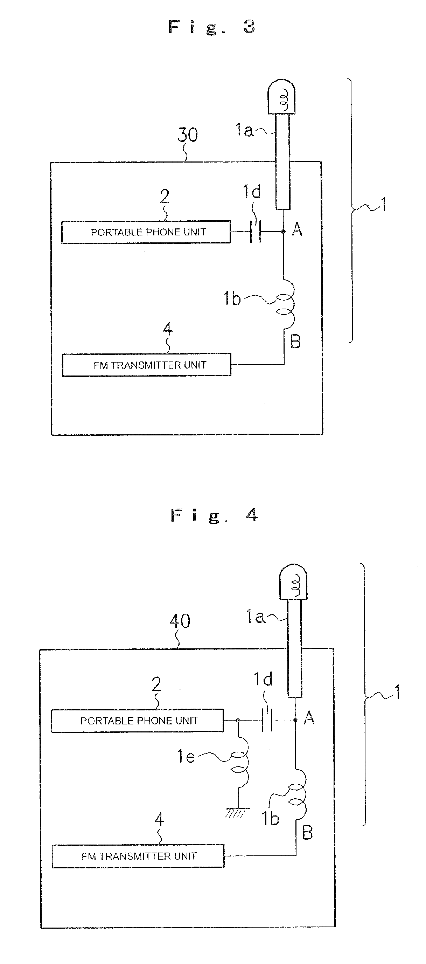

The third embodiment of the present invention will now be explained. Fig. 3 is a schematic diagram showing a configuration example of an FM modulation transmission function-embedded portable phone 30 applied with an antenna for portable terminals according to the third embodiment. Since the structural elements in Fig. 3 denoted with the same reference numbers as in Fig. 1 have the identical functions, redundant description of these structural elements will be omitted.

As shown in Fig. 3, the FM modulation transmission function-embedded portable phone 30 comprises an antenna 1 for portable terminals of the present embodiment, portable phone unit 2, and FM transmitter unit 4. The FM transmitter unit 4 is for performing frequency conversion to the sound signal to obtain an electronic wave of the FM band (frequency band from 76 M to 108 MHz) to be transmitted without wires from the antenna 1 to the outside. The sound signal to be transmitted here may be a signal generated inside the FM modulation transmission function-embedded portable phone 30 or a signal inputted from the outside through the interface unit (not shown).

The antenna 1 according to the third embodiment comprises an antenna element 1a generally embedded in the normal portable phones as well as newly added elements in the present embodiment i.e. the coil 1b and condenser 1d. The condenser 1d is connected between the portable phone unit 2 and the down end A of the antenna element 1a corresponding to the connecting node of the antenna element 1a and coil 1b. Thus, the condenser 1d is connected serially between the antenna element 1a and portable phone unit 2.

The condenser 1d connected between the antenna element 1a and portable phone unit 2 functions to block the passage of the FM-modulated FM frequency band but not to block the passage of the frequency band for portable phones. That is, the condenser 1d acts as high impedance to the low frequency band of FM to block the passage of the signal of FM frequency band. On the other hand, the condenser 1d acts as low impedance to the high frequency band for portable phones to allow the signal of the frequency band for portable phones to pass.

As explained above in details, according to the third embodiment, the coil 1b provided at the down end of the antenna element 1a which resonates with the frequency band for portable phones functions together with the antenna element 1a as a matching coil to resonate with the frequency band of FM and as a trap coil to block the passage of the frequency band for portable phones. Also, the condenser 1d connected between the antenna element 1a and portable phone unit 2 functions as an element for selectively allowing the signal of the frequency band for portable phones to pass.

Thereby, signals in two different frequency bands i.e. frequency bands for portable phone and for FM modulation transmission can be stably transmitted/received only by connecting the coil 1b and condenser 1d to the antenna element 1 generally provided in portable phones. Thus, it is possible to prevent the signal of the frequency band for portable phones from passing to the FM transmitter unit 4 and to prevent the signal of FM frequency band which is FM-modulated in the FM transmitter unit 4 from passing to the portable phone unit 2 at the time of transmission.

Although it is explained that the coil 1b is only connected between the portable phone unit 2 and FM transmitter unit 4 as an example, the condenser I may be further connected with the same configuration as in the second embodiment.

### (Fourth embodiment)

The fourth embodiment of the present invention will be now explained. Fig. 4 is a schematic diagram showing a configuration example of an FM modulation transmission function-embedded portable phone applied with an antenna for portable terminals according to the fourth embodiment. Since the structural elements in Fig. 4 denoted with the same reference numbers as in Fig. 3 have the identical functions, redundant description of these structural elements will be omitted.

As shown in Fig. 4, an antenna 1 for portable terminals according to the fourth embodiment comprises the second coil 1e as well as the above-mentioned antenna element 1a, coil 1b, and condenser 1d. In the second coil 1e, one end is connected between the condenser 1d and portable phone unit 2 and the other end is grounded. The one end of the second coil 1e may be connected between the down end A of the antenna element 1a and condenser 1d.

The second coil 1e connected between the antenna element 1a and portable phone unit 2 functions as an element for absorbing only the signal of the FM frequency band. That is, since the second coil 1e actives as low impedance to the low frequency band for FM modulation transmission and causes a short to the ground point, the signal of the FM frequency band is absorbed not to be supplied to the portable phone unit 2. On the other hand, since the second coil 1e actives as high impedance to the high frequency band for portable phones, the signal for portable phones is allowed to pass to the portable phone unit 2 without flowing from the coil 1e to the ground point.

As mentioned-above in details, according to the fourth embodiment, the second coil 1e connected between the antenna element 1a and portable phone unit 2 functions as an element for selectively absorbing the signal of the FM frequency band. Therefore, the leaked signal of FM frequency band can be absorbed by the second coil 1e even if the signal of FM frequency band is not completely blocked by the condenser 1d. Thus, signals of two different frequency bands i.e. the frequency bands for portable phones and for FM modulation transmission can be stably received/transmitted only by connecting the coil 1b, the condenser 1d and the second coil 1e to the antenna element 1a generally provided in portable phones.

Although it is explained in the above-mentioned fourth embodiment that only the coil 1b is connected between the portable phone unit 2 and FM transmitter unit 4 as an example, the condenser 1c may be further connected with the same configuration as in the second embodiment.

Also, in the above-mentioned fourth embodiment, it is explained that both the condenser 1d and second coil 1e are provided in the antenna 1 in addition to the antenna element 1 and coil 1b as an example. Besides, in the above-mentioned third embodiment, it is explained that the condenser 1d is provided in the antenna 1 in addition to the antenna element 1a and coil 1b as an example. However, these examples are not limiting the present invention. For example, the second coil I e may be provided in the antenna 1 in addition to the antenna element 1a and coil 1b.

In the above-mentioned first and second embodiments, it is explained that the FM tuner unit 3 is provided in the portable phone in addition to the portable phone unit 2 as examples. Also, in the above-mentioned third and fourth embodiments, it is explained that the FM transmitter unit 4 is provided in the portable phone in addition to the portable phone unit 2 as examples. However, these embodiments are not limiting the present invention. That is, both the FM tuner unit 3 and FM transmitter unit 4 may be provided in the portable phone in addition to the portable phone unit 2.

In this instance, the antenna 1 comprises at least the antenna element 1a, coil 1b, and either condenser 1d or second coil 1e. The condenser 1c may be further provided or both the condenser 1d and coil 1e may be provided.

In the above-mentioned first to fourth embodiments, although examples wherein the first frequency band is the frequency band for portable phones and the second frequency band is the frequency band of FM are explained, these are not limiting the present invention. The frequency band for portable phones belongs to UHF band and the frequency band of FM belongs to VHF band. However, as an another application of a frequency belonging to the VHF band, for example, the frequency band for television broadcast may be used as the second frequency band while equipping a television tuner unit instead of the FM tuner unit 3. Besides, the second frequency band is not limited to the VHF band. For example, the frequency band for AM broadcast of the middle wave band, for satellite broadcast/satellite communication of the micro wave band, for wireless LAN, or for Bluetooth may be used as the second frequency band.

In the above mentioned first to fourth embodiments, it is explained that the frequency band for portable phones is used as the first frequency band as an example while specifying the portable phone as an example of the phone terminal. However, this is not limiting the present invention. That is, a frequency band for television broadcast, wireless LAN, Bluetooth, or the like belonging to the same UHF band as for portable phones may be used as the first frequency band. For example, using a personal digital assistant (PDA), wherein a television broadcast reception function and FM broadcast reception function are embedded, and the like as a portable terminal, the frequency band for television broadcast and the frequency band for FM broadcast may be used as the first frequency band and the second frequency band, respectively.

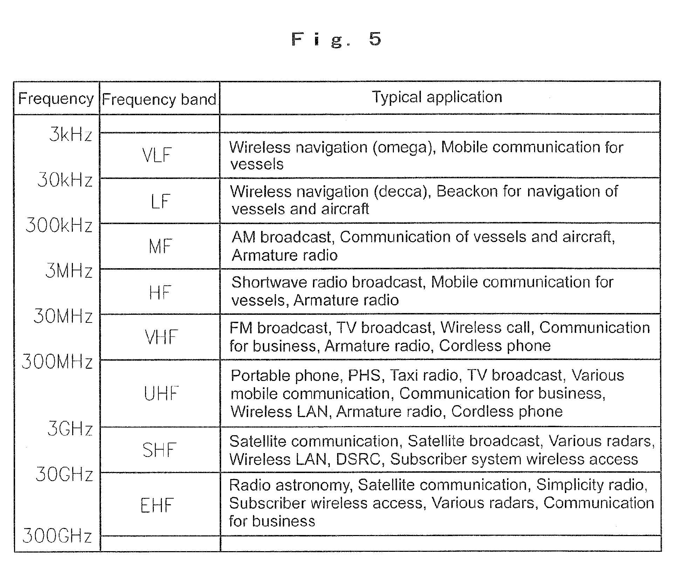

As mentioned above, an applicable combination of the first frequency band and second frequency band is arbitrary in the first to fourth embodiments. However, a combination of the different frequency bands such as a combination of VHF band and UHF band is preferable. Also, it is required that the first frequency band is higher than the second frequency band. Fig. 5 is a table showing typical examples for using electronic waves and frequency bands. It is preferable to have a combination of two frequency bands each different in the frequency band classification shown in Fig. 5. However, it is not indispensable to have a combination of two frequency bands each different in the frequency band classification. It is applicable to have a combination of two frequency bands in the same frequency band classification if there is a sufficient difference between the two frequency bands which allows signals in two different frequency bands to be stably transmitted/received by a single antenna 1.

By the way, the above-described first to fourth embodiments are not more than specific examples in implementing the present invention and these should not be interpreted as restricting the technological scope of the present invention. That is, the invention may be embodied in other specific forms without departing from the spirit or essential characteristic thereof.

### [Industrial Applicability]

An antenna for portable terminals of the present invention is useful for a portable terminal embedded with a function for receiving or transmitting signals of two different frequency bands such as a portable phone embedded with an FM broadcast reception function, an FM modulation transmission function, or the like.

## Claims

1. An antenna for portable terminals, comprising:
antenna element which resonates with the first frequency band concerning a signal to be processed by the first processing unit; and
coil provided serially between said antenna element and the second processing unit which processes the signal of the second frequency band lower than said first frequency band;
wherein an effective length of the combination said antenna element and said coil is set equal to the length at which said second frequency band resonates.

2. The antenna for portable terminals according to claim 1, further comprising:
condenser provided between said antenna clement and said second processing unit.

3. An antenna for portable terminals, comprising:
antenna element which resonates with the first frequency band concerning a signal to be processed by the first processing unit;
coil provided serially between said antenna element and the second processing unit which processes the signal of the second frequency band lower than said first frequency band; and
condenser provided serially between said antenna element and said first processing unit;
wherein an effective length of the combination said antenna element and said coil is set equal to the length at which said second frequency band resonates.

4. The antenna for portable terminals according to claim 2, further comprising:
second coil provided between said antenna element and said first processing unit.

5. An antenna for portable terminals, comprising:
antenna element which resonates with the first frequency band concerning a signal to be processed by the first processing unit;
coil provided serially between said antenna element and the second processing unit which processes the signal of the second frequency band lower than said first frequency band; and
second coil provided between said antenna element and said first processing unit;
wherein an effective length of the combination said antenna element and said coil is set equal to the length at which said second frequency band resonates.

6. The antenna for portable terminals according to claim 1,
wherein said first frequency band is UHF band and said second frequency band is VHF band.

7. The antenna for portable terminals according to claim 3,
wherein said first frequency band is UHF band and said second frequency band is VHF band.

8. The antenna for portable terminals according to claim 5,
wherein said first frequency band is UHF band and said second frequency band is VHF band.

9. A portable terminal, comprising:
first processing unit for performing a process related to transmission or reception or both of a signal of the first frequency band;
second processing unit for performing a process related to transmission or reception or both of a signal of the second frequency band lower than said first frequency band;
antenna element which resonates with said first frequency band; and
coil provided serially between said antenna element and said second processing unit;
wherein an effective length of the combination said antenna element and said coil is set equal to the length at which said second frequency band resonates; and
said first processing unit is connected to one end of said antenna element corresponding to a connecting node between said antenna element and said coil and said second processing unit is connected to the other end of said coil.

10. The portable terminal according to claim 9, further comprising:
condenser provided between said antenna element and said second processing unit

11. A portable terminal, comprising:
first processing unit for performing a process related to transmission or reception or both of a signal of the first frequency band;
second processing unit for performing a process related to transmission or reception or both of a signal of the second frequency band lower than said first frequency band;
antenna clement which resonates with said first frequency band;
coil provided serially between said antenna element and said second processing unit; and
condenser provided serially between said antenna element and said first processing unit;
wherein an effective length of the combination said antenna element and said coil is set equal to the length at which said second frequency band resonates; and
said first processing unit is connected through said condenser to down end of said antenna element corresponding to a connecting node between said antenna element and said coil while said second processing unit is connected to the other end of said coil.

12. The portable terminal according to claim 11, further comprising:
second coil provided between said antenna element and said first processing unit.

13. The portable terminal according to claim 11, comprising:
second coil provided between said antenna element and said first processing unit instead of said condenser.
